Europäisches Patentamt

European Patent Office

Office européen des brevets

(11) Publication number: **0 117 062**
**B1**

## (12) EUROPEAN PATENT SPECIFICATION

(45) Date of publication of patent specification: **11.05.88**

(21) Application number: **84300307.0**

(22) Date of filing: **18.01.84**

(51) Int. Cl.⁴: **G 05 D 23/08, G 01 N 1/24**

54 Gas sampling devices.

(30) Priority: **17.02.83 US 467554**

(43) Date of publication of application:
**29.08.84 Bulletin 84/35**

(45) Publication of the grant of the patent:
**11.05.88 Bulletin 88/19**

(84) Designated Contracting States:
**DE FR GB IT**

(56) References cited:
**FR-A-2 256 358**
**FR-A-2 389 123**
**US-A-3 930 613**
**US-A-3 960 500**

(73) Proprietor: **THE BABCOCK & WILCOX COMPANY**
**1010 Common Street P.O. Box 60035**
**New Orleans Louisiana 70160 (US)**

(72) Inventor: **Hall, George R., II**
**1917 Robindale Street**
**Wickliffe Ohio 44092 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to gas sampling devices.

The present invention has application (*inter alia*) to the control of all fluids in gas sampling devices which require a reduction of fluid flow or a shut-off fluid flow due to critical temperature changes in the fluid. The invention has particular application in the construction of gas analysers which use heated sampling systems to prevent liquid condensation in the system and which systems draw a gas through the system by using an aspirator to affect the gas flow. It is desirable in such devices to interrupt the aspiration of gas flow when the gas sample temperature falls below the dew point causing condensation within the apparatus. Known devices use a temperature sensor and a solenoid valve to control the aspirating air stream by shutting it on and off. Such an arrangement involves expensive electrical circuitry and connections as well as piping which frequently limits its applicability due to ambient effects on the valve and electrical components.

US—A—3 960 500 discloses a gas sampling device in which sample gas is caused to flow through an analysing chamber by means of an aspirator assembly connected to a main air supply. In order to overcome the problem of condensation resulting from an excessively low gas sample temperature, both the sampling assembly and the analysing chamber are provided with heaters.

US—A—3 930 613 and GB—A—1 468 069 both disclose thermally responsive valves including snap-acting bi-metallic discs which respond to changes in temperature so as to control fluid flow. In both of these disclosed arrangements, the bi-metallic disc is arranged to contact a protruding annular portion or member surrounding an inlet or outlet port in order to cut off fluid flow.

According to the invention there is provided a gas sampling device comprising:

a gas sampling chamber having a gas sensor therein;

a sample gas inlet connected to the gas sampling chamber;

an exhaust for the sample gas, the exhaust being connected to the gas sampling chamber; and

aspirating means connected to a supply of aspirating fluid for inducing flow of sample gas into the sample gas inlet and out of the exhaust; characterised by:

a switching chamber located in the path of the aspirating fluid; and

a snap-acting bi-metallic flexible element disposed in the switching chamber and being flexibly responsive to temperature change to move between a first flexed position in which the element induces a stop of the sample gas flow between the gas sampling chamber and the exhaust and a second flexed position in which the element permits flow between the gas sampling chamber and the exhaust to be induced, the switching chamber being larger than the bi-metallic element to make the bi-metallic element free-floating in the switching chamber and having a centrally-located outlet port communicating with the exhaust and a tapered area substantially covered by the flexible element and inclined towards the outlet port to make the bi-metallic element self-centring with respect to the outlet port during closure so as to ensure positive and repeatable closure thereof.

In accordance with a preferred embodiment of the present invention described hereinbelow, the flow of an aspirating gas and, hence, the flow of a control gas is regulated by use of a snap-acting bi-metallic switch which is mounted in a chamber of an aspirator inlet passage to thereby control the flow of the aspirated gas easily and automatically. The bi-metallic switch is a disc or similar element which has an area which overlies and closes the aspirator air passage whenever the temperature of operation is not in a satisfactory range. The bi-metallic element is chosen to achieve the desired control in a predetermined temperature range and is located in the aspirated chamber where it is not appreciably affected by the aspirating air. The bi-metallic element provides excellent control within the desired temperature range of the sample. The bi-metallic switch is made free-floating in a chamber having a height and diameter larger than the switch. A chamber surface having the controlled opening is tapered to make the switch self-aligning with the opening, thus ensuring positive closure and repeatability. Thus, a simple bi-metallic device will accomplish the same function as an electrical control valve but in a less expensive and easily-installed manner.

The preferred embodiment thus provides an improved temperature-actuated fluid flow control device in a gas sampling device in which a sample gas flow is regulated by the flow of an aspirating gas and this aspirating gas flow is controlled by a bi-metallic element which closes off the flow whenever a desired gas temperature is not achieved.

The preferred embodiment also provides a gas sampling device which includes a free-floating bi-metallic switch mounted in a tapered area having a switch-controlled opening to make the switch self-centring with respect to the opening.

Further, the preferred embodiment provides a temperature-actuated fluid flow control means for a gas sampling device having a free-floating bi-metallic switch which has symmetrical gas flow around the switch to ensure repeatable switch action.

The invention will now be further described, by way of illustrative and non-limiting example, with reference to the accompanying drawings, in which:

Figure 1 is a partial sectional view of a gas sampling device embodying the present invention;

Figure 2 is an expanded sectional view of a bi-metallic element in an open flow position and a mounting area for the element in the device of Figure 1;

Figure 3 is a top view of the bi-metallic switch and mounting area of Figure 2 and shows a section line A—A along which the view of Figure 2 is taken; and

Figure 4 is a graphical representation of the operation of the device of Figure 1 in response to temperature change.

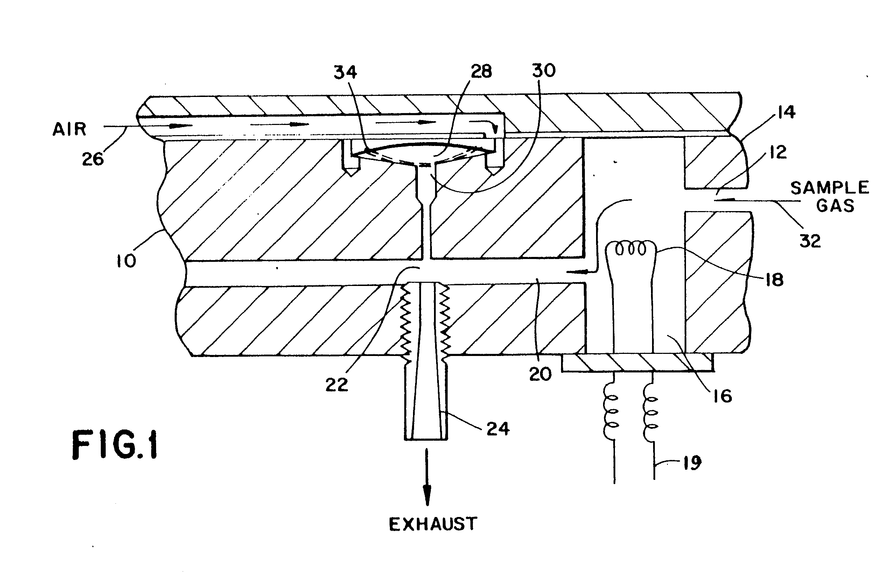

Referring to the drawings, Figures 1 to 3 show a temperature-actuated fluid flow control device 10 which in the embodiment illustrated comprises a device for sampling a gas. The device 10 includes an inlet passage 12 for the inflow of a gas sample into a heated block or housing 14 which contains a separate sampling chamber 16 having a gas sensing device 18 which may, for example, include means for determining the type of gas and possibly the quantity of such gas in a particular sample flow. As shown, the gas sensor 18 is connected through electrical lines 19 to suitable instruments for determining the desired gas sample characteristics. The sample gas then flows through a reduced flow area section 20 followed by an aspirating chamber 22 and then out through an exhaust or discharge area 24. The flow of the sample gas through the inlet 12 is controlled by the flow of an aspirating gas which is admitted in the direction of an arrow 26 into an aspirating gas flow control chamber, passage or port 28 through an opening 30 into the chamber 22 and then out the exhaust 24. This flow induces the flow of the sample gas through the inlet 12.

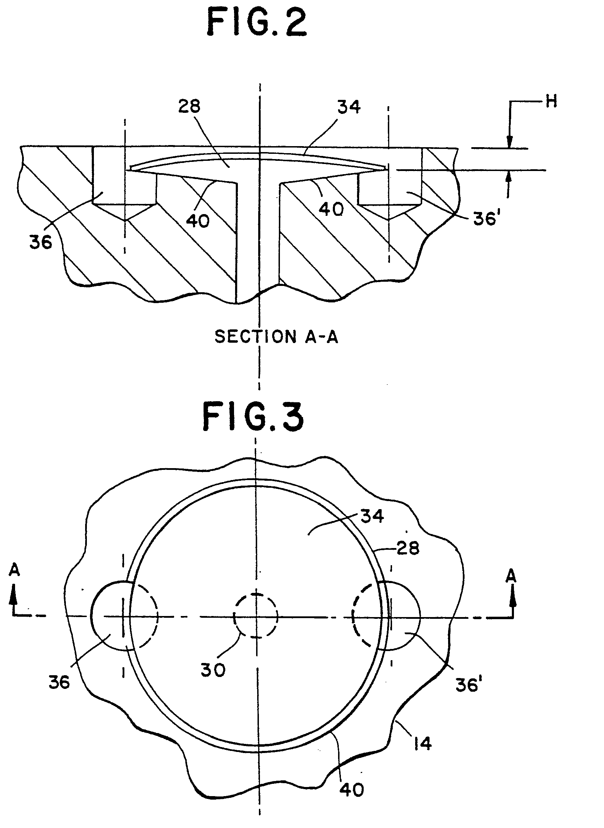

The flow of the sample gas in the direction of an arrow 32 is controlled by the flow of the aspirated gas in the direction of the arrow 26 through the opening 30. A bi-metallic element 34 is disposed in the aspirating gas flow control chamber or switching chamber 28 and may be flexed from the solid line indicated position to the dotted line indicated position in accordance with predetermined temperature changes of the aspirating gas. The bi-metallic element 34 is made up of metals having characteristics which will permit it to operate in the desired temperature range and it is advantageously in the form of a disc as may be best seen in Figures 2 and 3. The construction may be of any shape such that it will close the opening 30 when the temperature is other than a correct operating temperature.

In the embodiment of the invention shown as a gas analyser, when the block 14 is at proper operating temperature the bi-metallic element 34 will remain in the solid line position and permit flow of aspirating gas and inflow of the sample gas in the direction of the arrow 32 by allowing air around its periphery to exit into the passage 30. If the temperature of the block 14 drops below the desired temperature, the bi-metallic element 34 abruptly changes to the dotted line position thereby blocking air flow to the passage 30 and the aspirator to thereby shut off the sampling process. In so doing, it eliminates the possibility of condensate forming in the sample gas passageways. The bi-metallic element 34 is fabricated by bonding together two metals which have different thermal coefficients of expansion. By proper selection of metals and diameters and sizes, etc., the element 34 is made to deflect abruptly in order to rapidly cause displacement or exert forces.

As may be better be seen with particular reference to Figures 2 to 4, the bi-metallic element 34 is made to be free-floating within the control chamber 28. Free-floating in the present embodiment is provided by the presence of a clearance of approximately 0.254 mm (0.010 in) along the radius of the chamber 28 when the bi-metallic element 34 is of a diameter of approximately 15.88 mm (0.625 in) in its Figure 2 position. The height clearance is approximately 0.203 mm (0.008 in) for a chamber height H of 0.813 mm (0.032 in). This ability of the bi-metallic element 34 to float within the chamber 28 prevents it from being jammed in undesired positions as well as providing an adequate leakage of air from the inlet 26 to the passage 30. To make the bi-metallic element 34 self-centring with respect to the passage 30, a tapered section 40 is formed at the bottom of the chamber 28, which may be best described as a tapered section 40 having the passage 30 at its centre and angled towards the passage 30. The taper is approximately 0.102 mm (0.004 in), which taper is sufficient to make the free-floating bi-metallic element 34 self-centring with respect to the passage 30.

As may be best seen with particular reference to Figures 2 and 3, the tapered section 40 is formed between centres of a pair of counterbored sections 36 and 36' located along a diameter of the tapered section 40 and the centre of the passage 30. The counterbores 36 and 36' are approximately 3.96 mm (0.156 in) in diameter and are approximately 3.18 mm (0.125 in) deep. The purpose of the counterbores 36 and 36' is to provide unrestricted flow resulting in a swift and large volume of air flowing from the inlet 28 to both sides of the bi-metallic element 34, thus making it speedily responsive to temperature changes by maintaining a substantial volume of the same air on both sides of the bi-metallic element 34.

The bi-metallic element 34 is manufactured to specification as is known by those skilled in the art to have a movement of approximately 0.51 mm (0.02 in) between a snap temperature at static flow of approximately 193°C (380°F) and a reset temperature of approximately 166°C (330°F).

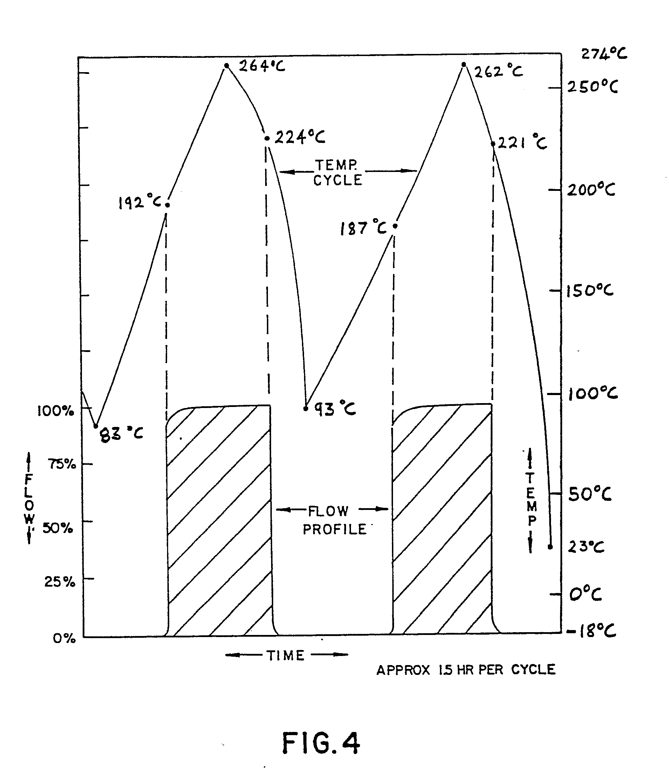

Figure 4 shows an actual snapping operation of the bi-metallic element 34 with time over a series of temperature cycles lasting approximately 1.5 hours/cycle. From the curve, it may be seen that flow from the chamber or port 28 to the passage 30 remains at approximately 0 percent over a time interval until the temperature in the passage 28 reaches approximately 192°C (377°F), at which time the bi-metallic element 34 snaps to its Figure 1 solid line position allowing 100 percent of the flow from the chamber 28 to the passage 30. Raising the temperature to 264°C (507°F) and then dropping it back down causes the bi-metallic element 34 to snap to its dotted line position as indicated in Figure 1 at a temperature of 224°C (435°F). Further decrease in the temperature to 93°C (199°F) and then raising it back up maintains the bi-metallic element 34 in its dotted line Figure 1 position sealing approximately all of the flow between the chamber 28 and passage 30 until the temperature reaches 187°C (368°F), at which time the bi-metallic element 34 snaps to its solid line Figure 1 position allowing 100 percent of the flow between the chamber 28 and the passage 30. Raising the temperature to 262°C (503°F) and then dropping it back down causes the next switch to occur at 221°C (430°F). It may thus be seen that with the foregoing construction the bi-metallic element 34 provides a positive closure and opening of the passage 30 at repeatable temperatures.

## Claims

1. A gas sampling device comprising:
a gas sampling chamber (16) having a gas sensor (18) therein;
a sample gas inlet (12) connected to the gas sampling chamber (16);
an exhaust (24) for the sample gas, the exhaust (24) being connected to the gas sampling chamber (16); and
aspirating means connected to a supply of aspirating fluid for inducing flow of sample gas into the sample gas inlet (12) and out of the exhaust (24);
characterised by:
a switching chamber (28) located in the path of the aspirating fluid; and
a snap-acting bi-metallic flexible element (34) disposed in the switching chamber (28) and being flexibly responsive to temperature change to move between a first flexed position in which the element induces a stop of the sample gas flow between the gas sampling chamber (16) and the exhaust (24) and a second flexed position in which the element permits flow between the gas sampling chamber (16) and the exhaust (24) to be induced, the switching chamber (28) being larger than the bi-metallic element (34) to make the bi-metallic chamber free-floating in the switching chamber (28) and having a centrally-located outlet port (30) communicating with the exhaust (24) and a tapered area (40) substantially covered by the flexible element (34) and inclined towards the outlet port (30) to make the bi-metallic element (34) self-centring with respect to the outlet port (30) during closure so as to ensure positive and repeatable closure thereof.

2. A device according to claim 1, wherein the bi-metallic element (34) has a predetermined height and the height of the switching chamber (28) is greater than the height of the bi-metallic element.

3. A device according to claim 1 or claim 2, wherein the bi-metallic element (34) is circular and the switching chamber (28) is also circular but has a radius larger than the radius of the bi-metallic element.

4. A device according to claim 3, wherein the switching chamber (28) has a pair of counterbored areas (36, 36') formed at the extreme ends of a diameter of the switching chamber to allow the symmetrical flow of fluid past the bi-metallic element (34).

## Patentansprüche

1. Gasprobenentnahmevorrichtung mit:
einer Gasprobeentnahmekammer (16) mit einem darin befindlichen Gassensor (18);
einem Probengaseinlaß (12), der mit der Gasprobenentnahmekammer (16) verbunden ist;
einem Auslaß (24) für das Probengas, wobei der Auslaß (24) mit der Gasprobenentnahmekammer (16) verbunden ist; und
mit Ansaugmitteln, die mit einer Versorgung für Ansaugfließmittel zum Einführen eines Stromes von Probengas in den Probenentnahmegaseinlaß (12) und aus dem Auslaß (24) heraus verbunden ist;
gekennzeichnet durch:
eine im Weg des Ansaugfließmittels angeordnete Schaltkammer (28) und
ein umschnappend wirkendes bimetallisches, flexibles Element (34), welches in der Schaltkammer (28) angeordnet und unter Ansprechen auf einen Temperaturwechsel flexibel ist, um sich zwischen einer ersten gebogenen Position, in welcher das Element eine Unterbrechungseinrichtung des Probengasstromes zwischen der Gasprobenentnahmekammer (16) und dem Auslaß (24) vorsieht, und einer zweiten gebogenen Position zu bewegen, in welcher das Element die Einführung des Stroms zwischen der Gasprobenentnahmekammer (16) und dem Auslaß (24) erlaubt, wobei die Schaltkammer (28) größer als das bimetallische Element (34) ist, um das Bimetallelement in der Schaltkammer (28) frei schwimmend zu machen, und eine mittig angeordnete Auslaßöffnung (30) aufweist, die mit dem Auslaß (24) in Verbindung steht, sowie einen abgeschrägten Bereich (40) hat, der im wesentlichen von dem flexiblen Element (34) abgedeckt und zur Auslaßöffnung (30) hin geneigt ist, um das Bimetallelement (34) bezüglich der Auslaßöffnung (30) während des verschlusses selbst zentrierend zu machen, um seinen wirksamen und wiederholbaren Verschluß sicherzustellen.

2. Vorrichtung nach Anspruch 1, wobei das Bimetallelement (34) eine vorbestimmte Höhe hat und die Höhe der Schaltkammer (28) größer als die Höhe des Bimetallelementes ist.

3. Vorrichtung nach Anspruch 1 oder Anspruch 2, wobei das Bimetallelement (34) kreisförmig ist und die Schaltkammer (28) auch kreisförmig ist, aber einen größeren Radius als der Radius des Bimetallelementes hat.

4. Vorrichtung nach Anspruch 3, wobei die Schaltkammer (28) ein Paar von angesenkten Bereichen (36, 36') aufweist, die an den extremen Enden eines Durchmessers der Schaltkammer gebildet sind, um den symmetrischen Strom des Fließmittels an dem Bimetallelement (34) vorbei zu erlauben.

## Revendications

1. Dispositif d'échantillonnage de gaz comprenant:

une chambre d'échantillonnage de gaz (16) contenant un détecteur de gaz (18);

une entrée de gaz échantillon (12) reliée à la chambre d'échantillonnage de gaz (16);

un échappement (24) de gaz échantillon, l'échappement étant relié à la chambre d'échantillonnage de gaz (16); et

un moyen d'aspiration relié à une source de fluide d'aspiration pour inciter du gaz échantillon à pénétrer dans l'entrée de gaz échantillon (12) et à sortir par l'échappement (24), caractérisé par:

une chambre de commutation (28) située sur le trajet du fluide d'aspiration; et

un élément flexible bimétallique à action brusque (34) disposé dans la chambre de commutation (28) et répondant par flexion à une modification de température pour se déplacer entre une première position fléchie dans laquelle il provoque un arrêt de l'écoulement de gaz échantillon entre la chambre d'échantillonnage de gaz (16) et l'échappement (24) et une seconde position fléchie dans laquelle il permet l'établissement de l'écoulement entre la chambre d'échantillonnage de gaz (16) et l'échappement (24) la chambre de commutation (28) étant plus grande que l'élément bimétallique (34) pour permettre à celui-ci d'y flotter librement et présentant un orifice de sortie (30) placé centralement communiquant avec l'échappement (24) et une zone évasée (40) sensiblement recouverte par l'élément flexible (34) et inclinée vers l'orifice de sortie (30) pour amener l'élément bimétallique (34) à se centrer automatiquement par rapport à l'orifice de sortie (30) pendant la fermeture de façon à en assurer la fermeture positive et reproductible.

2. Dispositif selon la revendication 1, dans lequel l'élément bimétallique (34) et une hauteur déterminée et la hauteur de la chambre de commutation (28) est supérieure à celle de l'élément bimétallique.

3. Dispositif selon la revendication 1 ou la revendication 2, dans lequel l'élément bimétallique (34) est circulaire et la chambre de commutation (28) est aussi circulaire mais a un rayon plus grand que celui de l'élément bimétallique.

4. Dispositif selon la revendication 1, dans lequel la chambre de commutation (28) présente deux zones contrealésées (36, 36') façonnées tout à fait aux extrémités d'un de ses diamètres pour permettre au fluide de franchir l'élément bimétallique (34) par écoulement symétrique.

FIG.1

AIR

EXHAUST

SAMPLE GAS

0 117 062

# FIG.2

SECTION A-A

# FIG.3

FIG.4